# EUROPÄISCHE PATENTSCHRIFT

(11) **EP 2 236 381 B1**
(45) Veröffentlichungstag und Bekanntmachung des Hinweises auf die Patenterteilung: **21.09.2016**
(21) Anmeldenummer: 10003320.8
(22) Anmeldetag: 27.03.2010
(51) Int. Cl.: B61D 17/02, B62D 35/00, B62D 37/02, B62D 47/02, B61D 17/20, B60D 5/00

(54) **Windleitelement im Bereich des Übergangs zwischen zwei gelenkig miteinander verbundenen Fahrzeugen**
Air flow guidance element in the area of two interconnected vehicles, especially railway vehicles
Elément de guidage du flux d'air dans la zone de connection entre deux véhicules accouplés, notamment ferroviaires

(30) Priorität: 01.04.2009 DE 202009004545 U; 04.02.2010 DE 202010001793 U; 24.06.2009 EP 09008237
(43) Veröffentlichungstag der Anmeldung: 06.10.2010
(73) Patentinhaber: Hübner GmbH & Co. KG, 34123 Kassel (DE)
(72) Erfinder:
(74) Vertreter: Walther, Walther & Hinz GbR

(56) Entgegenhaltungen:
- EP-A1- 0 043 444
- JP-A- 7 002 103
- US-A- 3 410 226
- US-A1- 2005 183 622

## Beschreibung

Die vorliegende Erfindung betrifft eine Anordnung von mehreren einen nach unten geöffneten im Wesentlichen U-förmigen Rahmen bildende Windleitelemente, wobei die Windleitelemente im Wesentlichen außenhautbündig im Bereich des Übergangs zwischen zwei gelenkig miteinander verbundenen Fahrzeugen anbringbar sind, wobei jedes Windleitelement im Querschnitt U-förmig oder im Querschnitt bogenförmig ausgebildet und in Längsrichtung zum Wagenkasten hin geöffnet ist und mindestens einen elastisch nachgiebigen Stützkörper aufweist.

Gelenkig miteinander verbundene Fahrzeuge sind durch einen sogenannten Übergang miteinander verbunden. Ein solcher Übergang umfasst neben einer Übergangsbrücke auch einen Balg, der die Übergangsbrücke zumindest tunnelartig umspannt. Die radiale Erstreckung des tunnelförmigen Balges ist hierbei insbesondere im Bereich der Seitenwandung geringer als die radiale Erstreckung des Fahrzeugkastens. Das heißt, dass zwischen der Fahrzeugaußenwand und dem Balg ein Abstand besteht. Dieser Abstand besteht zumindest im Bereich der Seitenwandungen aber auch im Bereich des Daches.

Insbesondere bei höheren Geschwindigkeiten entstehen im Bereich des Übergangs erhebliche Wirbel, die zu Strömungsverlusten führen, was wiederum eine erhöhte Antriebsleistung bedingt. Dies insbesondere dann, wenn man bedenkt, dass eine ganze Anzahl derartiger Übergänge bei einem Zug, beispielsweise einem ICE, vorgesehen sind. Es wurden bereits vielfach Versuche unternommen, um den Spalt zwischen Außenkontur des Balges und der Außenwand des Fahrzeugs abzudecken mit dem Ziel, eine strömungsgünstige Lösung bereitzustellen. Allerdings waren die Ergebnisse bislang wenig überzeugend. Dies insbesondere auch deshalb, weil eine vollständige Abdeckung des Zwischenraumes bzw. des Spaltes, zumindest bei Geradeausfahrt, nicht erreicht werden konnte. Des Weiteren ist hierbei insbesondere zu vermerken, dass die meisten Profile bei höheren Geschwindigkeiten flattern. Hiermit verbunden ist eine unangenehme Geräuschentwicklung.

In diesem Zusammenhang ist aus der US 3,410,226 A ein nach unten geöffneter Windleitelementenrahmen bekannt, der im Bereich der Wagenkastenaußenhaut an der Stirnseite des Wagenkastens eines aus mehreren gelenkig miteinander verbundenen Waggons bestehenden Schienenfahrzeugs angeordnet ist. Im Querschnitt ist der Windleitelementenrahmen in Richtung auf das benachbarte Fahrzeug konisch auslaufend ausgebildet. Die Windleitelementenrahmen zweier einander benachbarter Fahrzeuge schließen den Übergangsspalt zwischen den Fahrzeugen bei Geradeausfahrt im Wesentlichen ab.

Aus der JP 07002103 A ist eine Anordnung von mehreren einen nach unten geöffneten im Wesentlichen U-förmigen Rahmen bildende Windleitelemente gemäß dem Oberbegriff des Anspruchs 1 bekannt. Die Windleitelemente weisen hierbei auf ihrem einander zugewandten Ende jeweils eine Luftkammer auf.

Zur Erzielung einer geschlossenen Kontur ist bei einer Anordnung von mehreren einen im Wesentlichen U-förmigen Rahmen bildende Windleitelemente erfindungsgemäß vorgesehen, dass der U-förmige Rahmen im Einbauzustand am unteren Ende einen nach oben geöffneten im Querschnitt U-förmigen Balg aufweist. Bei zwei einander gegenüberliegenden Rahmen aus solchen Windleitelementen mit am unteren Ende angesetzten U-förmigen Balg ergibt sich zwischen den gelenkig miteinander verbundenen Fahrzeugen insofern eine geschlossene, im Wesentlichen außenhautbündige Kontur, die zuverlässige die Entstehung von Wirbeln zwischen den Fahrzeugen verhindert, wie dies der Fall ist, wenn, wie nach dem Stand der Technik, ein Balg beabstandet zur Außenwand zwischen den beiden Fahrzeugen verläuft. Der U-förmige Balg ist insbesondere als Wellenbalg ausgebildet.

Nach einem weiteren Merkmal der Erfindung ist bei dieser Anordnung vorgesehen, dass die einzelnen Windleitelemente des U-förmigen Rahmens seitlich aneinander anliegen, aber nicht miteinander verbunden sind, was bewirkt, dass die einzelnen Windleitelemente bei Fahrt des Fahrzeugs sich relativ zueinander verschieben können. Dies ist erforderlich, um den bei Fahrt auftretenden Knick-, Nick- und Wankbewegungen nachgeben zu können. In diesem Zusammenhang sei allerdings darauf hingewiesen, dass der U-förmige Balg fest mit dem unteren Ende der entsprechenden Windleitelemente verbunden ist.

Bereits an anderer Stelle ist erläutert worden, dass die einander gegenüberliegenden Windleitelemente eines Windleitelementenpaares derart aneinander anliegen, dass sie sich gegenseitig abstützen. Es ist weiterhin bekannt, dass kunststoffbeschichtete Stoffe eine verhältnismäßig hohe Eigensteifigkeit aufweisen. Die Windleitelemente eines Windleitelementenpaares, worunter hier im Folgenden auch die Windleitelemente zwei einander gegenüberliegender Rahmen verstanden werden, liegen nun derart aneinander an, dass die Windleitelemente im Bereich der Stirnseite, an der sich beabstandet zum Stützkörper der kunststoffbeschichtete Stoff befindet, miteinander verzahnend aneinander anliegen. Insbesondere diese Ausbildung verhindert das Flattern der Windleitelemente bei hohen Geschwindigkeiten. Um zu verhindern, dass das Windleitelement im Bereich der Stirnseite bei Anliegen am benachbarten Windleitelement ausbaucht, ist vorgesehen, dass im Bereich der Stirnseite des Stützkörpers die beiden einander gegenüberliegenden Stoffbahnen durch einen Steg miteinander verbunden sind.

In Bezug auf die Ausbildung der Windleitelemente ist nach einem weiteren Merkmal vorgesehen, dass die Aufstandsfläche des Windleitelements auf der Stirnseite des Wagenkastens größer ist als der Scheitelbereich, was dann gegeben ist, wenn die Schenkel des U- oder bogenförmigen Hohlkörpers zur freien Stirnseite, also zum benachbarten Wagenkasten zu konisch zulaufend ausgebildet sind.

Bei einer Anordnung von einander gegenüberliegenden Windleitelementen wird durch die konische Ausbildung erreicht, dass die einander gegenüberliegenden Windleitelemente derart mit ihren Stirnseiten aneinander liegen, dass diese sich gegenseitig abstützen ohne seitlich auszubrechen. Einander gegenüberliegende Windleitelemente bilden somit bei Geradeausfahrt eine im Wesentlichen ebene Fläche, die dem Wind kaum Angriffsfläche bietet, und insofern kaum Verwirbelungen auftreten.

Im Einzelnen ist in Bezug auf das Windleitelement vorgesehen, dass der konisch ausgebildete Körper einen Stützkörper umfasst, der mit einem kunststoffbeschichteten Stoff ummantelt ist. Es wurde an anderer Stelle erläutert, dass der nach Art eines Konus ausgebildete Stützkörper aus elastisch nachgiebigem Material, insbesondere einem Elastomer, hergestellt ist. Aus einem Elastomer hergestellte Profile sind üblicherweise schwarz. Es besteht nun allerdings ein Bedürfnis daran, die Windleitelemente der Fahrzeugfarbe anzupassen. Es wurden insofern bereits Versuche unternommen, den Stützkörper aus elastisch nachgiebigem Material mit einer Folie zu beschichten; es hat sich jedoch herausgestellt, dass derart ausgebildete Windleitelemente nur eine geringe Haltbarkeitsdauer aufwiesen, da sich die Folie relativ schnell vom Windleitelement löst. Auch eine Lackierung brachte nicht den gewünschten Erfolg, da die Lackierung unter Einfluss der Sonneneinstrahlung verhältnismäßig schnell brüchig wurde, und ihre ursprüngliche Farbe im Verlauf eines relativ kurzen Zeitraums bereits veränderte. So wurden insbesondere helle, weiße Farben schnell gelb.

Nun sind aus der Balgherstellung silikonbeschichtete Stoffe bekannt, die einerseits eine hohe UV-Beständigkeit aufweisen, und andererseits einfach zu reinigen sind. Durch die Ummantelung des Stützkörpers mit einem solchen kunststoffbeschichteten Stoff aus der Balgherstellung, insbesondere eines silikonbeschichteten Stoffes, können nun Windleitelemente bereitgestellt werden, die dauerhaft UV beständig sind und darüber hinaus leicht zu reinigen sind.

Im Einzelnen ist weiterhin vorgesehen, dass der Stützkörper in einer an der Stirnseite des Fahrzeugs angebrachten Nut lagert. Zur Erhöhung der Stabilität des Stützkörpers, insbesondere gegen auftretende Schwingungen, ist vorgesehen, dass zumindest an einer Seite, und zwar bevorzugt an der Innenseite, vorzugsweise jedoch zu beiden Seiten, eine Stützlamelle vorgesehen ist. Eine solche Stützlamelle, hergestellt ebenfalls aus elastisch nachgiebigem Material, erstreckt sich vorteilhaft über mindestens die Hälfte der Länge des Stützkörpers und läuft konisch in Richtung der Spitze des Windleitelementes zu. Insofern ergibt sich eine etwas stärkere Konturierung der konischen Ausbildung des Windleitelementes. In Bezug auf die Lamelle ist vorgesehen, dass auch die mindestens eine Stützlamelle durch eine Lamellennut an der Stirnseite des Fahrzeugs gehalten ist.

Zur Einsparung von Gewicht ist der Stützkörper nach einem Merkmal der Erfindung als Hohlkörper ausgebildet.

Nach einem besonderen Merkmal der Erfindung ist vorgesehen, dass der kunststoffbeschichtete Stoff an der Stirnseite des Stützkörpers beabstandet vorbeigeführt ist.

Anhand der Zeichnungen wird die Erfindung nachstehend beispielhaft näher erläutert.

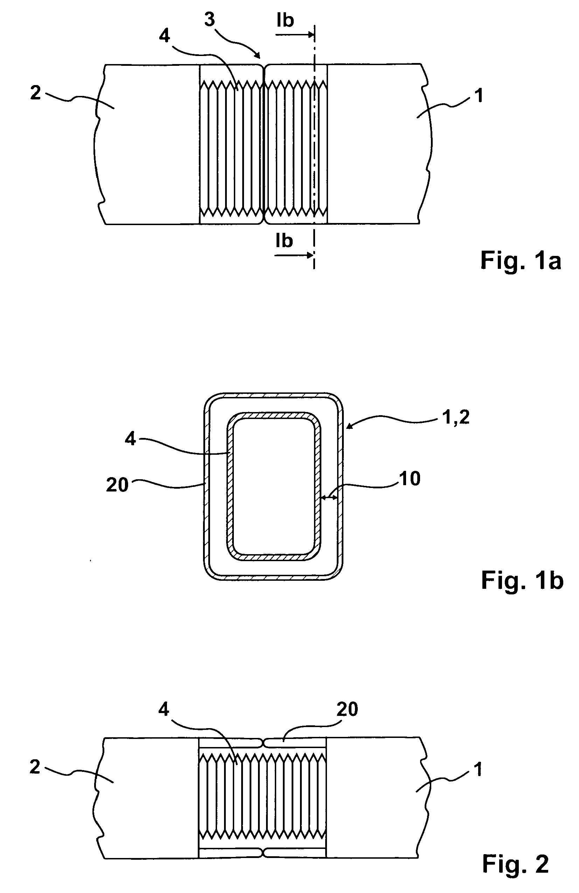

- Fig. 1 a: zeigt schematisch einen Übergang mit einem Balg und umlaufenden Windleitelementen in einer Seitenansicht;
- Fig. 1 b: zeigt einen Schnitt gemäß Linie I b - I b aus Fig. 1 a;
- Fig. 2: zeigt eine Ansicht von oben auf den Übergang, wobei der Dachbereich der Windelemente weggelassen worden ist;
- Fig. 3a: zeigt einen Schnitt durch ein Windleitelement ohne Stützlamellen;
- Fig. 3b: zeigt einen Schnitt durch ein Windleitelement mit Stützlamellen;
- Fig. 4a-c: zeigen die Stellung der Windleitelemente eines Windleitelementenpaares bei Geradeausfahrt (Fig. 4a), bei Querversatz (Fig. 4b) und bei Kurvenfahrt (Fig. 4c);
- Fig. 5: zeigt eine andere Ausführungsform eines Windleitelements;
- Fig. 6: zeigt einen durch Windleitelemente gebildeten U-förmigen Rahmen mit endseitig angeordnetem U-förmigen Balg;
- Fig. 7: zeigt eine Darstellung gemäß Fig. 6, wobei erkennbar ist, dass die eine Stoffbahn des einen Windleitelements den Stützkörper des anderen Windleitelements überlappt;
- Fig. 8: zeigt im Übergangsbereich des einen Windleitelementes zum anderen Windleitelement gemäß Fig. 6 fensterartige Aussparungen zu beiden Seiten des Übergangsbereichs.

Gemäß Figur 1 a sind die beiden schematisch dargestellten Fahrzeuge 1 und 2 durch einen Übergang 3 mit einem tunnelförmigen Balg 4 verbunden. Der besseren Übersichtlichkeit wegen ist die Übergangsbrücke als Teil des Übergangs in den Zeichnungen weggelassen worden, ebenso wie die Kupplung der beiden Fahrzeuge.

Wie aus Figur 1b und Figur 2 erkennbar, ist der Wagenkasten 1, 2 vom Durchmesser her größer als der mit 4 bezeichnete Balg. Der Abstand zwischen der Außenwandung des Wagenkastens 1 und dem Balg 4 ist als Spalt 10 bezeichnet. Dieser Spalt 10 wird abgedeckt durch ein Windleitelementenpaar, bestehend aus zwei Windleitelementen 20, die an der Stirnseite eines jeden Wagenkastens eines Fahrzeugs 1, 2 umlaufend, U-förmig als Rahmen oder nur seitlich, zu beiden Seiten des Fahrzeugs (rechts und links), verlaufend angebracht sind.

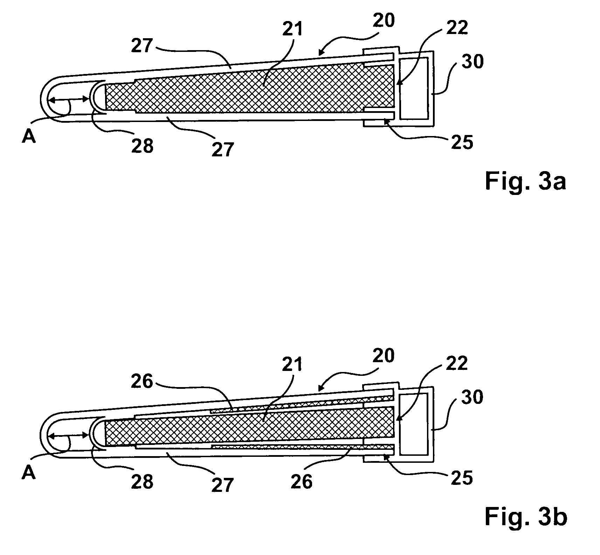

Die Ausbildung eines Windleitelementes 20 ergibt sich aus den Figuren 3a, 3b. Hierbei ist ein Stützkörper 21 vorgesehen, der in der Nut 22 einer Aufnahmeschiene 30 angeordnet ist. Die Aufnahmeschiene 30 ist an der Stirnseite des Wagenkastens umlaufend oder zumindest U-förmig verlaufend befestigt (Fig. 1 b). Gemäß Figur 3a ist ein konischer Stützkörper vorgesehen, der allein durch seine Konizität die erforderliche Stabilität aufbringt, und dem Windleitelement die konische Ausprägung verleiht. Gemäß Figur 3b besitzt die Aufnahmeschiene 30 darüber hinaus parallel zu der Nut 22 zu beiden Seiten jeweils eine Lamellennut 25 zur Aufnahme der Stützlamelle 26 sowie des kunststoffbeschichteten Stoffes 27. Die Stützlamelle läuft konisch auf den Stützkörper 21 zu, der insofern parallel zueinander verlaufende Seitenflächen aufweist, und vermittelt insofern dem Windleitelement in Verbindung mit dem beschichteten Stoff die im Querschnitt konische Kontur. Im Bereich der Stirnseite des Stützkörpers 21 befindet sich ein Steg 28, der die beiden gegenüberliegenden Seiten des kunststoffbeschichteten Stoffes verbindet, der beabstandet zur Stirnseite des Stützkörpers an dem Stützkörper vorbeigeführt wird, so dass sich zwischen der Stirnseite des Stützkörpers und der Stirnseite des Windleitelementes ein Abstand A ergibt. Es wurde bereits an anderer Stelle dargelegt, dass der mit einem Kunststoff beschichtete Stoff, und hier insbesondere ein mit einem Silikon oder Gummimaterial beschichteter Stoff, verhältnismäßig steif, aber dennoch elastisch nachgiebig ist.

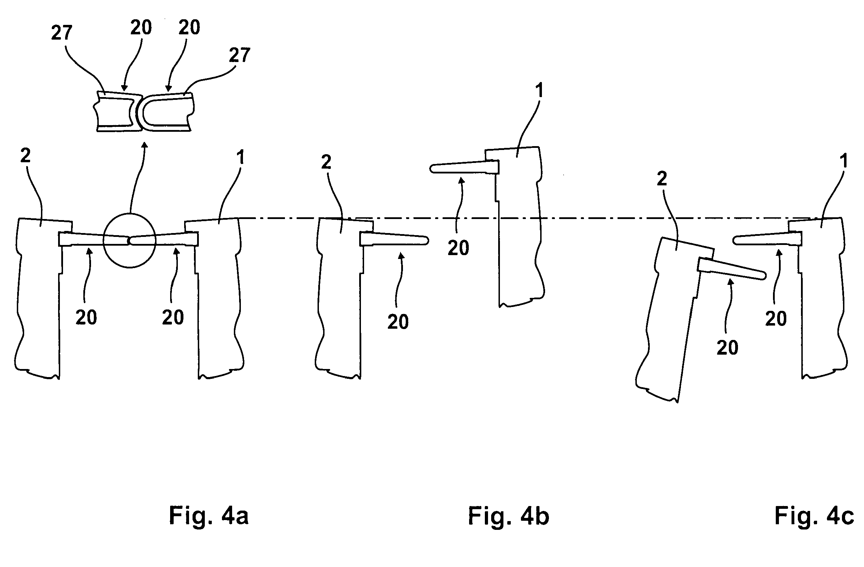

Bei Geradeausfahrt, wie in der Ausschnittsvergrößerung von Figur 4a dargestellt, greifen die beiden Windleitelemente eines Windleitelementenpaares verzahnend ineinander. Dieses verzahnende Ineinandergreifen verhindert zuverlässig ein Flattern der Windleitelemente bei hoher Geschwindigkeit.

In den Figuren 4b und 4c wird die Stellung der Windleitelemente bei Querversatz der Fahrzeuge, wie sie bei Wank- und Nickbewegungen auftreten sowie bei Kurvenfahrt (Fig. 4c) dargestellt.

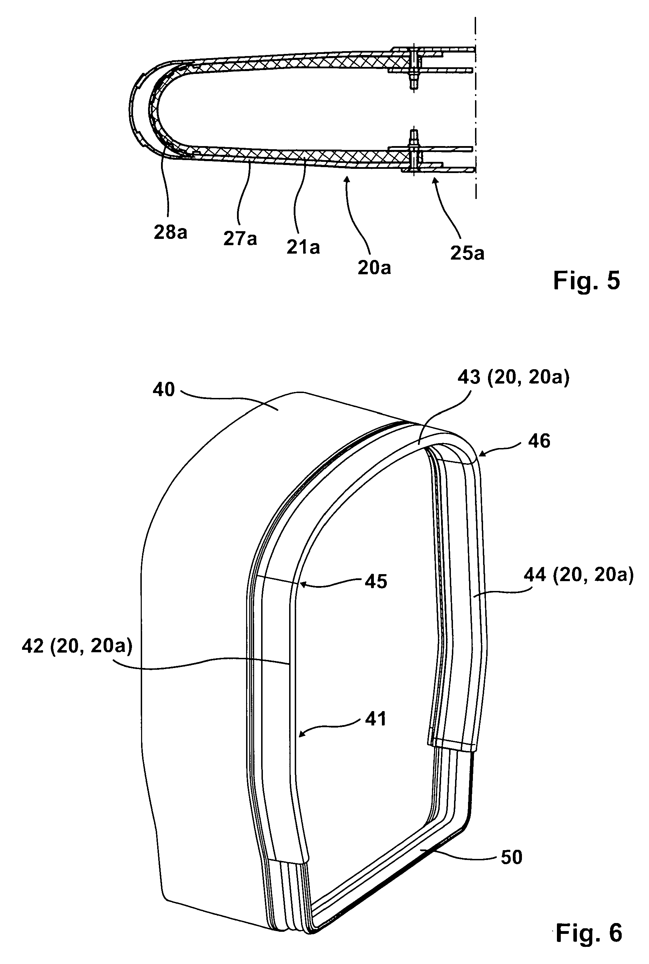

Ein gleichartig ausgebildetes Windleitelement 20a ist in Figur 5 dargestellt. Dieses Windleitelement 20a unterscheidet sich von dem Windleitelement 20 dadurch, dass es als Hohlkörper ausgebildet ist. Ansonsten ist es gleich. Die Bezugszeichen sind insofern lediglich zur Unterscheidung mit dem Buchstaben "a" versehen.

Figur 6 zeigt beispielhaft den mit 40 bezeichneten Wagenkasten, an dem ein U-förmiger Rahmen 41, gebildet aus drei Windleitelementen 20, 20a, stirnseitig angebracht ist. Die drei Windleitelemente 20, 20a, die den Rahmen 41 bilden, sind bei der Ausbildung des Rahmens mit 42, 43 und 44 bezeichnet.

Die Windleitelemente werden - wie dies bereits zuvor erläutert worden ist-u. a. durch einen Stützkörper gebildet, der aus Vollmaterial oder auch hohl ausgebildet sein kann. Die Stützkörper der Windleitelemente 42, 43, 44 liegen nunmehr im Bereich des Übergangs 45 und 46 auf Block aneinander an. Das bedeutet, dass die Windleitelemente durch die Aufnahme an der Stirnseite des Wagenkastens 40 seitlich gegeneinander vorgespannt sind.

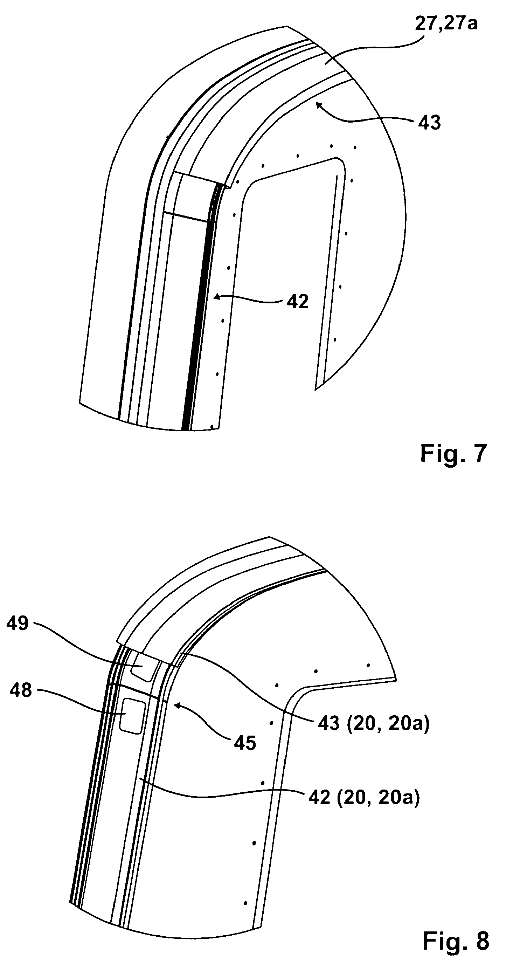

Aus der in Figur 7 dargestellten Einzelheit ergibt sich, dass die Stoffbahnen 27, 27a zweier benachbarter Windleitelemente 42, 43, 44 einander überlappen.

Aus Figur 8 ist erkennbar, dass die beiden Windleitelemente 42 und 43 im Übergangsbereich 45 zu beiden Seiten jeweils eine fensterartige Aussparung 48, 49 aufweisen. Durch eine solche fensterartige Aussparung 48, 49 zweier einander auf Block anliegender Stützkörper wird erreicht, dass diese Stützkörper, die in sich relativ steif sind, den auftretenden Fahrbewegungen wie Knick-, Nick- und Wankbewegungen in der Lage sind nachzugeben, ohne dass sich die Stützkörper der einander benachbarten Windleitelemente 42, 43 im Übergangsbereich 45 wesentlich voneinander abheben.

Der Rahmen 41 weist an seinem unteren Ende den U-förmigen Balg 50 auf, der mit dem Rahmen verbunden ist.

## Patentansprüche

1. Anordnung von mehreren einen nach unten geöffneten im Wesentlichen U-förmigen Rahmen (41) bildende Windleitelemente (20, 20a), wobei die Windleitelemente im Wesentlichen außenhautbündig im Bereich des Übergangs zwischen zwei gelenkig miteinander verbundenen Fahrzeugen anbringbar sind, wobei jedes Windleitelement (20, 20a) im Querschnitt U-förmig oder im Querschnitt bogenförmig ausgebildet und in Längsrichtung zum Wagenkasten hin geöffnet ist und mindestens einen elastisch nachgiebigen Stützkörper (21, 21 a) aufweist,
**dadurch gekennzeichnet,**
**dass** der U-förmige Rahmen (41) im Einbauzustand am unteren Ende einen nach oben geöffneten im Querschnitt U-förmigen Balg (50) aufweist.
(Hieran schließen sich die Ansprüche 2 bis 15 gemäß der Eingabe vom 21. Dezember 2011 an).

2. Anordnung nach Anspruch 1,
**dadurch gekennzeichnet,**
**dass** das den Steg des U-förmigen Rahmens (41) bildende Windleitelement (43) mit den die Schenkel bildenden Windleitelementen (42) im Übergangsbereich (45, 46) von Steg zu Schenkel getrennt ist.

3. Anordnung nach einem der Ansprüche 1 oder 2,
**dadurch gekennzeichnet,**
**dass** die Windleitelemente (42, 43, 44) im Übergangsbereich (45, 46) auf Block aneinander anliegen.

4. Anordnung nach einem der voranstehenden Ansprüche,
**dadurch gekennzeichnet,**
**dass** die Stützkörper (21, 21 a) im Bereich des Übergangs von einem Stützkörper zum anderen Stützkörper zweier benachbarter Windleitelemente (42, 43, 44) jeweils mindestens eine Aussparung (48, 49) aufweisen.

5. Anordnung nach einem der voranstehenden Ansprüche,
**dadurch gekennzeichnet,**
**dass** der Stützkörper (21, 21 a) mit einer Stoffbahn (27, 27a) aus einem kunststoffbeschichteten Stoff ummantelt ist.

6. Anordnung nach einem der voranstehenden Ansprüche,
**dadurch gekennzeichnet,**
**dass** der Stützkörper (21, 21 a) in einer an der Stirnseite des Fahrzeugs angebrachten Nut (22, 22a) lagert.

7. Anordnung nach einem der voranstehenden Ansprüche,
**dadurch gekennzeichnet,**
**dass** der Stützkörper (21) zumindest zu einer, vorzugsweise zu beiden Seiten eine Stützlamelle (26) aufweist.

8. Anordnung nach Anspruch 7,
**dadurch gekennzeichnet,**
**dass** sich die Stützlamelle (26) über mindestens die Hälfte der Länge des Stützkörpers (21) erstreckt.

9. Anordnung nach einem der voranstehenden Ansprüch 7 oder 8,
**dadurch gekennzeichnet,**
**dass** die mindestens eine Stützlamelle (26) durch eine Lamellennut (25) an der Stirnseite des Fahrzeugs (1, 2) gehalten ist.

10. Anordnung nach einem der voranstehenden Ansprüche 5 bis 9,
**dadurch gekennzeichnet,**
**dass** die Stoffbahn (27, 27a) aus dem kunststoffbeschichteten Stoff an der freien Stirnseite des Stützkörpers (21, 21 a) beabstandet vorbeigeführt ist.

11. Anordnung nach Anspruch 10,
**dadurch gekennzeichnet,**
**dass** im Bereich der Stirnseite des Stützkörpers (21, 21 a) die beiden einander gegenüberliegenden Stoffbahnen (27, 27a) durch einen Steg (28, 28a) miteinander verbunden sind.

12. Anordnung nach Anspruch 10 oder 11,
**dadurch gekennzeichnet,**
**dass** die Stoffbahn (27, 27a) des einen der zwei nebeneinander befindlichen Windleitelemente (42, 43, 44) den Stützkörper (21, 21 a) des anderen Windleitelements im Übergangsbereich (45, 46) überlappt.

13. Anordnung nach einem der voranstehenden Ansprüche,
**dadurch gekennzeichnet,**
**dass** der Stützkörper (21 a) als Hohlkörper ausgebildet ist.

14. Anordnung nach Anspruch 13,
**dadurch gekennzeichnet,**
**dass** die Schenkel des U- oder bogenförmigen, hohlen Stützkörpers (21 a) zur freien Stirnseite des Stützkörpers (21 a) konisch zulaufend ausgebildet sind.

15. Anordnung nach einem der voranstehenden Ansprüche, 1 bis 12
**dadurch gekennzeichnet,**
**dass** der Stützkörper (21) zu seiner freien Stirnseite konisch zulaufend ausgebildet ist.

## Claims

1. Assembly of several airflow guidance elements (20, 20a) forming a downward opening substantially U-shaped frame (41), wherein the airflow guidance elements can be mounted so as to be substantially flush with the outer skin in the area of the gangway between two articulately connected vehicles, wherein each airflow guidance element (20, 20a) has a U-shaped or arc shaped cross section and is open in the longitudinal direction of the vehicle body and has at least one elastically flexible supporting body (21, 21 a),
**characterized in that**,
in the mounted state, the U-shaped frame (41) has a cross-sectionally U-shaped bellows (50) opened upwards at the lower end.

2. Assembly according to claim 1,
**characterized in that**,
the airflow guidance element (43) forming the web of the U-shaped frame (41) is separated from the airflow guidance elements (42) forming the leg in the transition area (45, 46) from the web to the leg.

3. Assembly according to one of claims 1 or 2,
**characterized in that**,
the airflow guidance elements (42, 43, 44) rest in full contact against each other in the transition area (45, 46).

4. Assembly according to one of the afore-mentioned claims,
**characterized in that**,
in the area of the transition from one supporting body to the other supporting body of two adjacent airflow guidance elements (42, 43, 44), the supporting bodies (21, 21 a) have at least one recess (48, 49).

5. Assembly according to one of the afore-mentioned claims,
**characterized in that**,
the supporting body (21, 21 a) is covered by a panel (27, 27a) of a fabric coated with a synthetic material.

6. Assembly according to one of the afore-mentioned claims,
**characterized in that**,
the supporting body (21, 21 a) is mounted in a groove (22, 22a) attached to the front side of the vehicle.

7. Assembly according to one of the afore-mentioned claims,
**characterized in that**,
the supporting body (21) has a support strip (26) on at least one, preferably on both sides.

8. Assembly according to claim 7,
**characterized in that**,
the support strip (26) extends on at least half of the length of the supporting body (21).

9. Assembly according to one of the afore-mentioned claims 7 or 8,
**characterized in that**,
the at least one support strip (26) is held on the front side of the vehicle (1, 2) by a strip groove (25).

10. Assembly according to one of the afore-mentioned claims 5 to 9,
**characterized in that**,
the panel (27, 27a) of a fabric coated with a synthetic material is led at a distance past the free front side of the supporting body (21, 21 a).

11. Assembly according to claim 10,
**characterized in that**,
in the area of the front side of the supporting body (21, 21 a), the two opposing panels (27, 27a) are connected to each other by a web (28, 28a).

12. Assembly according to claim 10 or 11,
**characterized in that**,
the panel (27, 27a) of one of the two adjacent airflow guidance elements (42, 43, 44) overlaps the supporting body (21, 21 a) of the other airflow guidance element in the transition zone (45, 46).

13. Assembly according to one of the afore-mentioned claims,
**characterized in that**,
the supporting body (21 a) is configured as a hollow body.

14. Assembly according to claim 13,
**characterized in that**,
the leg of the U- or arc-shaped hollow supporting body (21 a) is configured so as to be conically tapered at the free front side of the supporting body (21 a).

15. Assembly according to one of the afore-mentioned claims 1 to 12,
**characterized in that**,
the supporting body (21) is configured so as to be conically tapered at its free front side.

## Revendications

1. Agencement de plusieurs éléments de guidage du flux d'air (20, 20a) formant un cadre ouvert par le bas substantiellement en forme de U (41), où les éléments de guidage du flux d'air peuvent être fixés de manière à affleurer substantiellement l'enveloppe extérieure dans la région d'un passage d'intercommunication entre deux véhicules articulés, où chaque élément de guidage du flux d'air (20, 20a) présente une coupe transversale en forme de U ou en forme d'arc et est ouvert dans la direction longitudinale de la caisse du véhicule et comporte au moins un corps de support (21, 21 a) flexible élastique,
**caractérisé en ce que**,
à l'état monté, le cadre en forme de U (41) comporte à l'extrémité inférieure un soufflet ouvert vers le haut présentant une coupe transversale en forme de U (50).

2. Agencement selon la revendication 1,
**caractérisé en ce que**,
l'élément de guidage du flux d'air (43) formant la traverse du cadre en forme de U (41) est séparé des éléments de guidage du flux d'air (42) formant les branches dans la zone de transition (45, 46) entre la traverse et les branches.

3. Agencement selon une des revendications 1 ou 2,
**caractérisé en ce que**,
les éléments de guidage du flux d'air (42, 43, 44) s'appuient à bloc l'un contre l'autre dans la zone de transition (45, 46).

4. Agencement selon l'une quelconque des revendications précédentes,
**caractérisé en ce que**,
les corps de support (21, 21 a) comportent au moins un évidement (48, 49) dans la zone de transition d'un corps de support à l'autre de support de deux éléments de guidage du flux d'air (42, 43, 44) adjacents.

5. Agencement selon l'une quelconque des revendications précédentes,
**caractérisé en ce que**,
le corps de support (21, 21 a) est enveloppé dans une bande de tissu (27, 27a) composée d'un tissu revêtu d'une matière synthétique.

6. Agencement selon l'une quelconque des revendications précédentes,
**caractérisé en ce que**,
le corps de support (21, 21 a) est monté dans une rainure (22, 22a) fixée sur la face avant du véhicule.

7. Agencement selon l'une quelconque des revendications précédentes,
**caractérisé en ce que**,
le corps de support (21) comporte une lamelle de support (26) sur au moins un côté, de préférence de chaque côté.

8. Agencement selon la revendication 7,
**caractérisé en ce que**,
la lamelle de support (26) s'étend sur au moins la moitié de la longueur du corps de support (21).

9. Agencement selon l'une quelconque des revendications précédentes 7 ou 8,
**caractérisé en ce que**,
l'au moins une lamelle de support (26) est maintenue par une rainure de lamelle (25) sur la face avant du véhicule (1, 2).

10. Agencement selon l'une quelconque des revendications précédentes 5 à 9,
**caractérisé en ce que**,
la bande de tissu (27, 27a) composée du tissu revêtu d'une matière synthétique passe à distance de la face avant libre du corps de support (21, 21 a).

11. Agencement selon la revendication 10,
**caractérisé en ce que**,
dans la région de la face avant du corps de support (21, 21 a) les deux bandes de tissus (27, 27a) opposées sont reliées par une traverse (28, 28a).

12. Agencement selon la revendication 10 ou 11,
**caractérisé en ce que**,
la bande de tissu (27, 27a) de l'un des deux éléments de guidage du flux d'air (42, 43, 44) adjacents chevauche le corps de support (21, 21 a) de l'autre élément de guidage du flux d'air dans la zone de transition (45, 46).

13. Agencement selon l'une quelconque des revendications précédentes,
**caractérisé en ce que**,
le corps de support (21 a) est un corps creux.

14. Agencement selon la revendication 13,
**caractérisé en ce que**,
la branche du corps de support (21 a) creux, en forme de U ou d'arc est de forme conique en direction de la face avant libre du corps de support (21 a).

15. Agencement selon une des revendications précédentes 1 à 12,
**caractérisé en ce que**,
le corps de support (21) est de forme conique en direction de sa face avant libre.
